# EUROPEAN PATENT SPECIFICATION

(11) **EP 3 026 525 B1**
(45) Date of publication and mention of the grant of the patent: **26.06.2019**
(21) Application number: 15196586.0
(22) Date of filing: 26.11.2015
(51) Int. Cl.: G09G 3/20, G09G 3/34, H04M 1/725, H04M 1/18, G06F 1/16, H04B 1/3888

(54) **CASE OF ELECTRONIC DEVICE FOR CONTROLLING DISPLAY AND METHOD THEREFOR**
GEHÄUSE EINER ELEKTRONISCHEN VORRICHTUNG ZUR ANZEIGESTEUERUNG UND VERFAHREN DAFÜR
BOÎTIER DE DISPOSITIF ÉLECTRONIQUE DE COMMANDE D'AFFICHAGE ET PROCÉDÉ ASSOCIÉ

(30) Priority: 28.11.2014 KR 20140168716
(43) Date of publication of application: 01.06.2016
(73) Proprietor: Samsung Electronics Co., Ltd., Gyeonggi-do 16677 (KR)
(72) Inventor: PARK, Ki Hyun, 16709 Gyeonggi-do (KR)
(74) Representative: HGF Limited

(56) References cited:
- US-A1- 2004 082 367
- US-A1- 2014 002 408
- US-B1- 6 466 202

## Description

### TECHNICAL FIELD

Certain exemplary embodiments of the present disclosure provide a case for an electronic device for controlling a display (or a display panel) included in the case of the electronic device, and a method thereof.

### BACKGROUND

Currently, as information communication technology is being developed, network devices, such as base stations, have been installed in many parts of the world. Electronic devices communicate data with other electronic devices through networks, thereby making it possible for users to freely use the networks at many places in the world.

Various types of electronic devices have provided various functions according to a current digital convergence trend. For example, a smartphone may support an internet access function using the network, a function of reproducing a music or video file, and a function of capturing photos and videos using an image sensor, in addition to a function of making a phone call to a counterpart. Also, each user often carries his or her electronic device as the electronic device has become lighter and smaller, according to the above-described various functions.

Each user may further place their electronic device in a case to protect a screen or housing of their electronic device, which may be vulnerable to impact. In addition, each user may place their electronic device in a case as an accessory or a fashion tool for the purpose of distinguished their electronic device from those of other users.

The above information is presented as background information only to assist with an understanding of the present disclosure. No determination has been made, and no assertion is made, as to whether any of the above might be applicable as prior art with regard to the present disclosure.

US2014/0002408 A1 discloses an auxiliary input device for use with a mobile phone, where the auxiliary input device takes the form of a case for the mobile phone.

US2004/0082367 A1 discloses an electronic apparatus which has a light reflective panel, the reflectivity of which changes from a mirror-like state to a transparent state.

US6466202 B1 discloses a portable information terminal unit that includes a transparent LCD display that may display information to a user.

### SUMMARY

It is an aim of certain embodiments of the present disclosure to address, solve, mitigate or obviate, at least partly, at least one of the problems and/or disadvantages associated with the related art, for example at least one of the problems and/or disadvantages mentioned herein. Certain embodiments of the present invention aim to provide at least one advantage over the related art, for example at least one of the advantages mentioned herein.

The invention is set out in the appended set of independent claims. Preferred embodiments are contained in the dependent claims.

Accordingly, certain embodiments of the present disclosure provide a case for controlling a display included in the case of an electronic device, and a method therefor.

In accordance with an exemplary aspect of the present invention, a case of an electronic device is provided. The case includes a display, a power feeding part configured to receive power from the electronic device (or from any other suitable power source), and a controller configured to transmit voltage to at least a part of the display corresponding to a screen of the electronic device using the received power, and adjust a level of the transmitted voltage, wherein the controller is further configured to adjust the voltage level such that the at least part of the display becomes transparent or enters a mirror state, and receive data from the electronic device, and wherein the voltage level adjusted by the controller is determined according to the received data, and wherein the at least part of the display comprises an indicator for providing notification of an event generated in the electronic device, and the controller is further configured to display the indicator on the display by adjusting the voltage level, and wherein the indicator is inactivated before the data is received.

In accordance with another exemplary aspect of the present invention, a method for controlling a display of a case of an electronic device is provided. The method includes receiving power, adjusting a level of voltage to be transmitted to at least a part of the display of the case corresponding to a screen of the electronic device, and transmitting the voltage to the display by the adjusted level using the received power, wherein the method further comprises receiving data from the electronic device and adjusting the voltage level such that the at least part of the display becomes transparent or enters a mirror state, and wherein the adjusted voltage level is determined according to the received data, and wherein the at least part of the display comprises an indicator for providing notification of an event generated in the electronic device, and wherein the method further comprises displaying the indicator on the display by adjusting the voltage level, and wherein the indicator is inactivated before the data is received.

In accordance with an example of the present disclosure, there is provided a computer program comprising instructions arranged, when executed, to implement a case, method, device, system and/or apparatus in accordance with any aspect, embodiment, example or claim disclosed herein. A further exemplary aspect of the present invention provides a machine-readable storage storing such a program.

Other aspects, advantages, and salient features of the invention will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, and features and advantages of certain exemplary embodiments and aspects of the present invention will be more apparent from the following description taken in conjunction with the accompanying drawings, in which:
FIG. 1 is a block diagram illustrating an electronic device in a network environment according to various exemplary embodiments of the present disclosure;
FIG. 2 is a drawing illustrating a case of an electronic device according to various exemplary embodiments of the present disclosure;
FIG. 3 is a drawing illustrating indicators to be displayed on a display of a case of an electronic device according to various exemplary embodiments of the present disclosure;
FIG. 4A is a drawing illustrating operations performed in an electronic device and a case of the electronic device according to an event generated in the electronic device according to various exemplary embodiments of the present disclosure;
FIG. 4B is a drawing illustrating an image of emphasizing an indicator displayed on a display of a case of an electronic device according to various exemplary embodiments of the present disclosure;
FIG. 5 is a drawing illustrating an indicator and a dot image displayed on a display of a case of an electronic device according to various exemplary embodiments of the present disclosure;
FIG. 6 is a drawing illustrating an operation of implementing a user input pattern, received in a case of an electronic device, in the electronic device according to various exemplary embodiments of the present disclosure;
FIG. 7 is a drawing illustrating indicators and a background image displayed on a display of a case of an electronic device according to various exemplary embodiments of the present disclosure;
FIG. 8A is a drawing illustrating an indicator and a background image displayed on a display of a case of an electronic device according to various exemplary embodiments of the present disclosure;
FIG. 8B is a drawing illustrating a background image and various indicators corresponding to the background image, which are displayed on a display of a case of an electronic device, according to various exemplary embodiments of the present disclosure;
FIG. 9 is a drawing illustrating an indicator and a background image displayed on a display of a case of an electronic device according to various exemplary embodiments of the present disclosure;
FIGS. 10A and 10B are drawings illustrating an electronic device and a cross section of a case of the electronic device according to various exemplary embodiments of the present disclosure;
FIGS. 11A to 11C are drawings illustrating an electronic device and a cross section of a case of the electronic device according to various exemplary embodiments of the present disclosure; and
FIG. 12 is a flowchart illustrating a method for processing a user input in a case of an electronic device according to various exemplary embodiments of the present disclosure.

Throughout the drawings, it should be noted that the same or similar reference numbers may be used to depict the same or similar elements, features, and structures.

### DETAILED DESCRIPTION

The following description of exemplary embodiments of the present disclosure, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the various embodiments described herein can be made without departing from the scope of the present invention.

Descriptions of well-known functions, operations, processes, features, components, elements, structures, and constructions may be omitted for clarity and conciseness, and to avoid obscuring the subject matter of the present invention.

The terms and words used in the following description and claims are not limited to the bibliographical meanings, but, are merely used to enable a clear and consistent understanding of the present disclosure. Accordingly, it should be apparent to those skilled in the art that the following description of various embodiments of the present disclosure is provided for illustration purpose only and not for the purpose of limiting the present invention, as defined by the appended claims.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprises", "includes", "contains" and "has", and variations thereof, for example "comprising" and "comprise", means "including but not limited to", and is not intended to (and does not) exclude other features, elements, components, structures, constructions, integers, steps, processes, operations, characteristics, properties and/or groups thereof.

In the disclosure herein, the expressions "A or B", "at least one of A or/and B", "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The expressions such as "1st", "2nd", "first", "second", and the like used in various embodiments of the present disclosure may refer to various elements irrespective of the order and/or priority of the corresponding elements, but do not limit the corresponding elements. The expressions may be used to distinguish one element from another element. For instance, both a first user device and a second user device indicate different user devices from each other irrespective of the order or priority of the corresponding elements. For example, a first component may be referred to as a second component and vice versa without departing from the scope of the present disclosure.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element) between the element and the other element.

Depending on the situation, the expression "configured to" used herein may be used as, for example, the expression "suitable for", "having the capacity to", "designed to", "adapted to", "made to", or "capable of'. The term "configured to" should not mean only "specifically designed to" hardware. Instead, under any situation, the expression "a device configured to" may mean that the device is "capable of' operating together with another device or other components. For example, a "processor configured to perform A, B, and C" may mean a generic-purpose processor (e.g., a central processing unit (CPU) or an application processor (AP)) which may perform corresponding operations by executing one or more software programs which stores a dedicated processor (e.g., an embedded processor) for performing a corresponding operation.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude various embodiments of the present disclosure.

Features, elements, components, structures, constructions, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

Electronic devices according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Moving Picture Experts Group phase 1 or phase 2 (MPEG-1 or MPEG-2) audio layer 3 (MP3) players, mobile medical devices, cameras, or wearable devices (e.g., smart glasses, head-mounted-devices (HMDs), an electronic apparel, electronic bracelets, electronic necklaces, electronic appcessories, electronic tattoos, smart mirrors, or smart watches).

According to various embodiments of the present disclosure, the electronic devices may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ and PlayStation™), electronic dictionaries, electronic keys, camcorders, or electronic picture frames.

According to various embodiments of the present disclosure, the electronic devices may include at least one of various medical devices (e.g., various portable medical measurement devices (e.g., blood glucose meters, heart rate meters, blood pressure meters, thermometers, and the like), a magnetic resonance angiography (MRA), a magnetic resonance imaging (MRI), a computed tomography (CT), scanners, ultrasonic devices, and the like), navigation devices, global positioning system (GPS) receivers, event data recorders (EDRs), flight data recorders (FDRs), vehicle infotainment devices, electronic equipment for vessels (e.g., navigation systems for vessels, gyrocompasses, and the like), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to various embodiments of the present disclosure, the electronic devices may include at least one of parts of furniture or buildings/structures, electronic boards, electronic signature receiving devices, projectors, or various measuring instruments (e.g., water meters, electricity meters, gas meters, wave meters, and the like). According to various embodiments of the present disclosure, the electronic devices may be one or more combinations of the above-mentioned devices. The electronic devices according to various embodiments of the present disclosure may be flexible electronic devices. Also, the electronic devices according to various embodiments of the present disclosure are not limited to the above-mentioned devices, and may include new electronic devices according to technology development

Hereinafter, the electronic devices according to various embodiments of the present disclosure will be described with reference to the accompanying drawings. The term "user" used herein may refer to a person who uses an electronic device or may refer to a device (e.g., an artificial electronic device) which uses an electronic device.

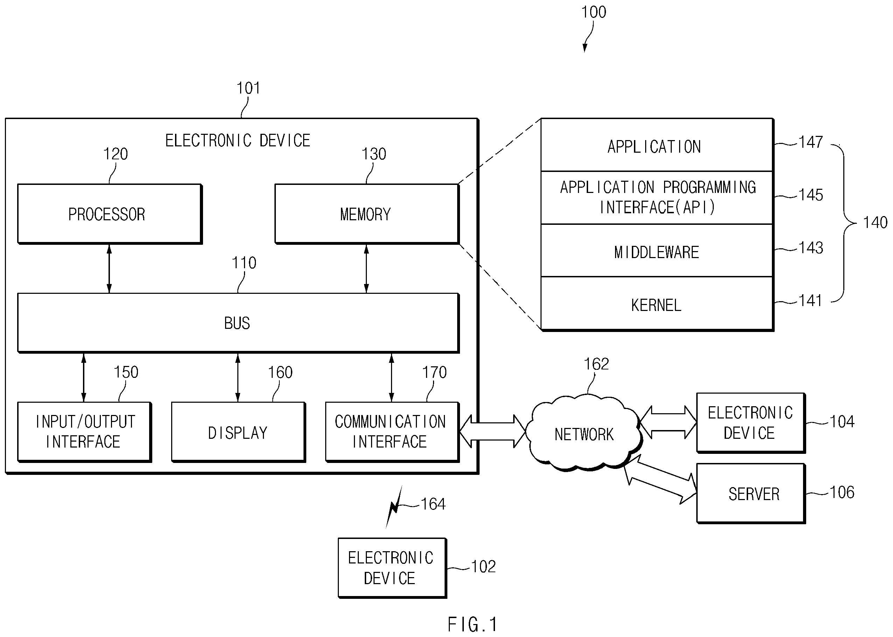

FIG. 1 is a block diagram illustrating an electronic device in a network environment according to various embodiments of the present disclosure.

Referring to FIG. 1, a description will be given of an electronic device 101 in the network environment 100 according to various embodiments of the present disclosure. The electronic device 101 may include a bus 110, a processor 120, a memory 130, an input and output interface 150, a display 160, and a communication interface 170. In various embodiments of the present disclosure, at least one of the components may be omitted from the electronic device 101, and other components may be additionally included in the electronic device 101.

The bus 110 may be, for example, a circuit which connects the components 110, 120, 130, 150, 160 and 170 with each other and transmits communication (e.g., a control message and/or data) between the components.

The processor 120 may include one or more of a CPU, an AP, or a communication processor (CP). For example, the processor 120 may perform calculation or data processing about control and/or communication of at least another of the components of the electronic device 100.

The memory 130 may include a volatile and/or non-volatile memory. The memory 130 may store, for example, instructions or data associated with at least another of the components of the electronic device 101. According to an embodiment of the present disclosure, the memory 130 may software and/or a program 140. The program 140 may include, for example, a kernel 141, a middleware 143, an application programming interface (API) 145, and/or an application program (or an "application") 147. At least a part of the kernel 141, the middleware 143, or the API 145 may be referred to as an operating system (OS).

The kernel 141 may control or manage, for example, system resources (e.g., the bus 110, the processor 120, the memory 130, and the like) used to execute an operation or function implemented in the other programs (e.g., the middleware 143, the API 145, or the application program 147). Also, the kernel 141 may provide an interface which may control or manage system resources by accessing a separate component of the electronic device 101 in the middleware 143, the API 145, or the application program 147.

The middleware 143 may play a role as, for example, a go-between such that the API 145 or the application program 147 communicates with the kernel 141 and transmits and receives data.

Also, the middleware 143 may process one or more task requests received from the application program 147 according to priority. For example, the middleware 143 may provide priority which may use system resources (the bus 110, the processor 120, the memory 130, and the like) of the electronic device 101 to at least one of the application program 147. For example, the middleware 143 may perform scheduling or load balancing for the one or more work requests by processing the one or more work requests according to the priority provided to the at least one of the application program 147.

The API 145 may be, for example, an interface in which the application program 147 controls a function provided from the kernel 141 or the middleware 143. For example, the API 145 may include at least one interface or function (e.g., instruction) for file control, window control, image processing, text control, and the like.

The input and output interface 150 may play a role as, for example, an interface which may transmit instructions or data input from a user or another external device to another component (or other components) of the electronic device 101. Also, input and output interface 150 may output instructions or data received from another component (or other components) of the electronic device 101 to the user or the other external device.

The display 160 may include, for example, a liquid crystal display (LCD), a light emitting diode (LED) display, an organic LED (OLED) display, a microelectromechanical systems (MEMS) display, or an electronic paper display. The display 160 may display, for example, various contents (e.g., text, images, videos, icons, symbols, and the like) to the user. The display 160 may include a touch screen, and may receive, for example, touch, gesture, proximity, or a hovering input using an electronic pen or a part of a body of the user.

The communication interface 170 may establish communication between, for example, the electronic device 101 and an external device (e.g., a first external electronic device 102, a second external electronic device 104, or a server 106). For example, the communication interface 170 may connect to a network 162 through wireless communication or wired communication and may communicate with the external device (e.g., the second external electronic device 104 or the server 106).

The wireless communication may use, for example, at least one of long term evolution (LTE), LTE-advanced (LTE-A), code division multiple access (CDMA), wideband CDMA (WCDMA), universal mobile telecommunications system (UMTS), wireless broadband (WiBro),or global system for mobile communications (GSM), and the like as a cellular communication protocol. Also, the wireless communication may include, for example, local-area communication 164. The local-area communication 164 may include, for example, at least one of Wi-Fi communication, Bluetooth (BT) communication, near field communication (NFC), GPS communication, and the like. The wired communication may include at least one of, for example, universal serial bus (USB) communication, high definition multimedia interface (HDMI) communication, recommended standard 232 (RS-232) communication, plain old telephone service (POTS) communication, and the like. The network 162 may include a telecommunications network, for example, at least one of a computer network (e.g., a local area network (LAN) or a wide area network (WAN)), the Internet, or a telephone network.

Each of the first and second external electronic devices 102 and 104 may be the same or different device as or from the electronic device 101. According to an embodiment of the present disclosure, the server 106 may include a group of one or more servers. According to various embodiments of the present disclosure, all or some of operations executed in the electronic device 101 may be executed in another electronic device or a plurality of electronic devices (e.g., the first external electronic device 102, second external electronic device 104 or the server 106). According to an embodiment of the present disclosure, if the electronic device 101 should perform any function or service automatically or according to a request, it may request another device (e.g., the first external electronic device 102, the second external electronic device 104 or the server 106) to perform at least a part of the function or service, rather than executing the function or service for itself or in addition to the function or service. The other electronic device (e.g., the first external electronic device 102, the second external electronic device 104 or the server 106) may execute the requested function or the added function and may transmit the executed result to the electronic device 101. The electronic device 101 may process the received result without change or additionally and may provide the requested function or service. For this purpose, for example, cloud computing technologies, distributed computing technologies, or client-server computing technologies may be used.

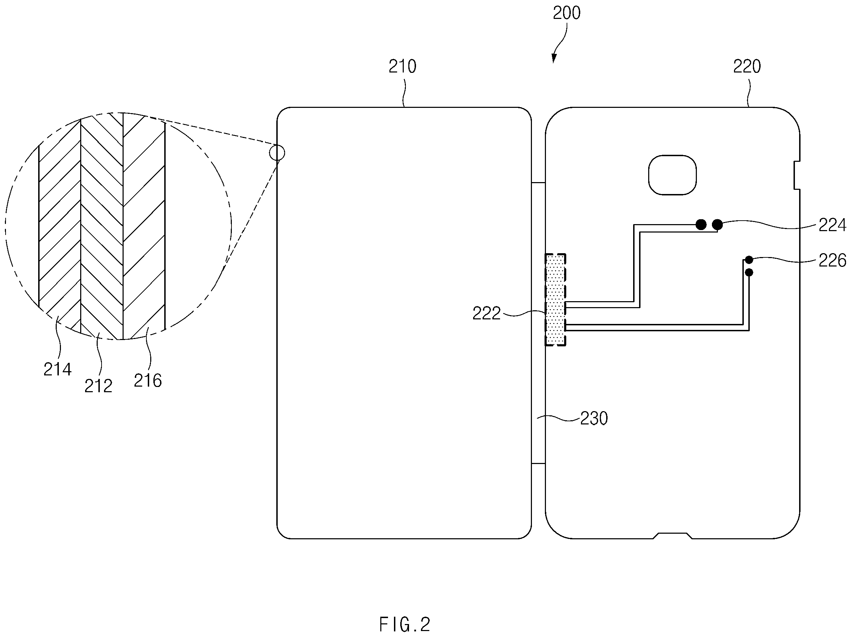

FIG. 2 is a drawing illustrating a case of an electronic device according to various embodiments of the present disclosure.

Referring to FIG. 2, a case 200 may include a front case 210 and a rear case 220.

The rear case 220 may combined with the electronic device (not shown). For example, the rear case 220 may be combined with a rear case of the electronic device, rather than a battery cover of the electronic device. Although not illustrated in FIG. 2, a plurality of combining members, such as a c-clip, for being combined with the rear case of the electronic device may be included inside the rear case 220.

According to various embodiments of the present disclosure, the rear case 220 may have a shape of covering one surface of the rear case of the electronic device without replacing the battery cover of the electronic device. For example, if the battery cover of the electronic device is fixed, the rear case 220 according to various embodiments of the present disclosure, may be combined with the rear case of the electronic device.

The front case 210 may cover a screen of the electronic device. In this case, a hinge 230 may be installed between the front case 210 and the rear case 220 such that the front case 210 may be opened and closed on the screen of the electronic device. Also, magnets may be installed on the front case 210 and one region of the electronic device such that the front case 210 is not easily detached from the screen of the electronic device while it is closed. The rear case 220 may include a combining member for the front case 210 such that the front case 210 may be fixed.

A description will be given in detail of structures and functions of the front case 210 and the rear case 220.

The front case 210 may include a display panel (or layer) (hereinafter referred to as a display 212), a touch panel (or layer) 214, and a transparent display (or layer) 216. The rear case 220 may include a controller (e.g. a micro controller unit (MCU), or any other suitable type of controller or processor) 222, a power feeding part 224, and a data communicating part 226.

At least a part of the display 212 may be configured to be switchable between a transparent state and a non-transparent state (e.g. a mirror state, opaque state, or any other suitable non-transparent state) according to an applied control voltage, for example a voltage applied at one or more control nodes of the display 212. For example, at least a part of the display 212 may include an electrophoretic display (EPD) material device, an electrochromic (EC) device, a cholesteric device, or any other suitable type of device. References herein to an EPD device, EC device or cholesteric device include references to any other suitable type of device for performing an equivalent function. A state of the EPD device, the EC device, or the cholesteric device may be changed according to a level of voltage. For example, the EPD device, the EC device, or the cholesteric device may become a non-transparent or transparent state according to a level of voltage held at two opposite ends of the EPD device, the EC device, or the cholesteric device. Also, the EPD device, the EC device, or the cholesteric device may become a mirror state according to a level of voltage held at two opposite ends of the EPD device, the EC device, or the cholesteric device. The level of the voltage held at the two opposite ends of the EPD device, the EC device, or the cholesteric device may be determined according to a level of voltage (or an amount of voltage) transmitted to the MCU 222. For example, the MCU 222 may receive power from the electronic device (or from any other suitable power source, for example a battery provided in the case 210, which may be separate from the power source used by the electronic device) through the power feeding part 224 and may transmit voltage to the EPD device, the EC device, or the cholesteric device using the received power. The meaning of 'transmitting voltage' or 'transmitting a voltage' to a specific object may be interpreted as the meaning of 'holding (a) voltage' at the specific object or 'applying (a) voltage' across the specific object, for example via one or more control nodes of the specific object.

According to various embodiments of the present disclosure, the display 212 may include the EPD device, the EC device, or the cholesteric device in a region corresponding to the screen of the electronic device. If the screen of the electronic device is in an off-state, the MCU 222 may adjust a voltage level such that the EPD device, the EC device, or the cholesteric device maintains a non-transparent state or a mirror state. Also, for a user of the electronic device to see the screen of the electronic device over the front case 210, if the screen of the electronic device is an on-state, the MCU 222 may adjust a voltage level such that the EPD device, the EC device, or the cholesteric device becomes a transparent state. For example, if the user receives a phone call through the electronic device or if the screen of the electronic device is the on-state by pushing a physical button installed in the electronic device, the MCU 222 may adjust a voltage level such that the EPD device, the EC device, or the cholesteric device becomes the transparent state. The MCU 222 may receive information, for providing notification of the on-state or the off-state, from the electronic device through the data communicating part 226 and may adjust a voltage level for the EPD device, the EC device, or the cholesteric device according to the received information.

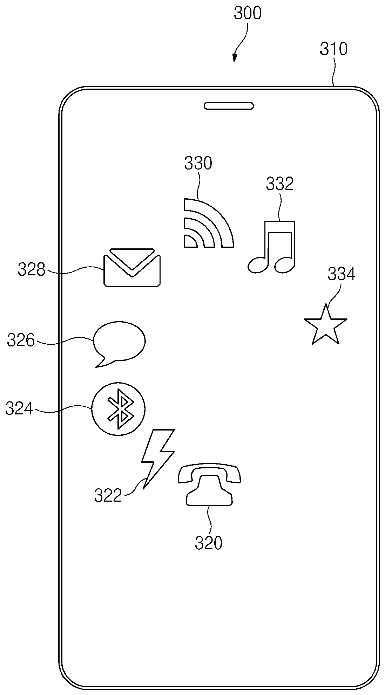

Also, if a user input on an indicator (refer to FIG. 3) displayed on the display 212 or a predetermined region is received through the touch panel 214, the MCU 222 may adjust a voltage level such that the EPD device, the EC device, or the cholesteric device becomes the transparent state. In other words, the MCU 222 may adjust a voltage level for the EPD device, the EC device, or the cholesteric device according to a user input on the touch panel 214. Also, an operation of adjusting a voltage level for the EPD device, the EC device, or the cholesteric device, which is performed by the MCU 222 according to various embodiments of the present disclosure is as follows: The MCU 222 may transmit a data signal of controlling the electronic device according to the user input to the electronic device through the data communicating part 226 and may receive a data signal for a control result corresponding to the data signal from the electronic device. Therefore, the MCU 222 may adjust a voltage level for the EPD device, the EC device, or the cholesteric device according to the received data signal for the received control result.

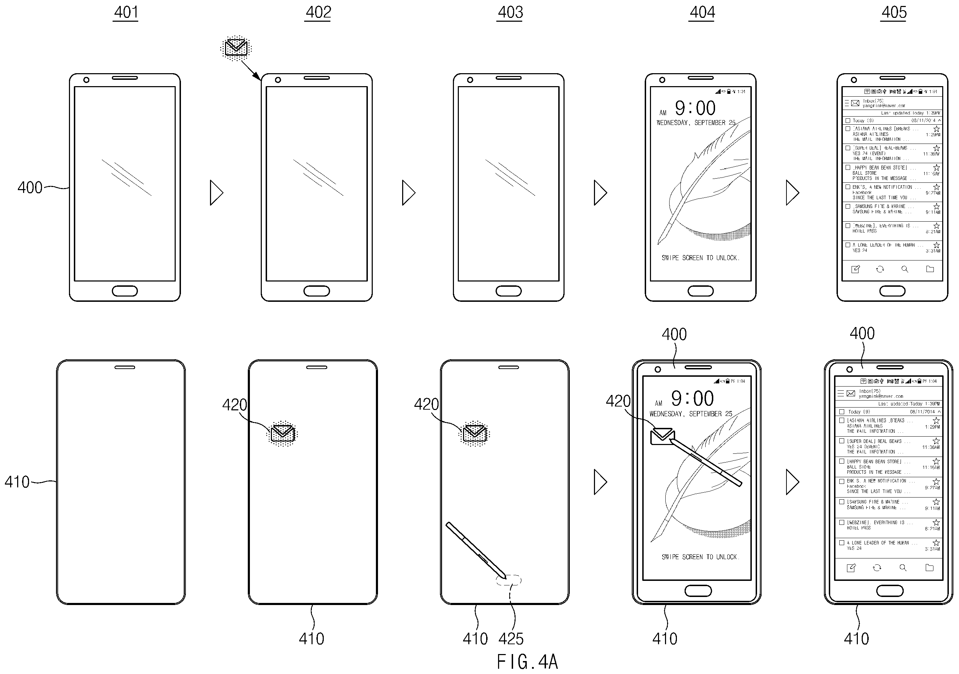

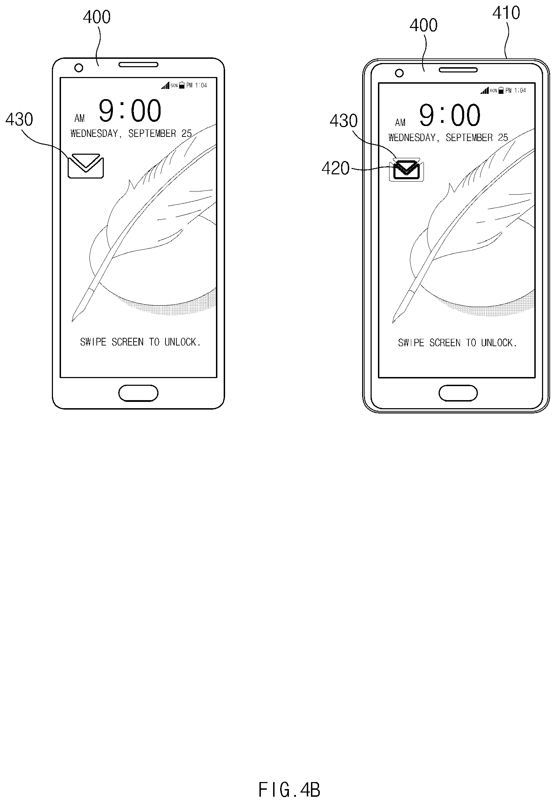

Indicators to be displayed on a display of an electronic device will be described with reference to FIGS. 3, 4A, and 4B.

FIG. 3 is a drawing illustrating indicators to be displayed on a display of a case of an electronic device according to various embodiments of the present disclosure.

Referring to FIG. 3, a case 300 includes a front case 310. Specifically, the front case 310 includes a display (e.g., a display 212 of FIG. 2) that may include indicators 320 to 334.

According to various embodiments of the present disclosure, the indicators 320 to 334 may be for providing notification of events generated in the electronic device.

Each of the indicators 320 to 334 may be the EPD device, the EC device, or the cholesteric device and may be inserted or implemented into the display in a manufacturing process. In other words, a shape of each of the indicators 320 to 334 may not be changed according to a user input, and only a characteristic of each of the indicators 320 to 334, such as transparency, may be changed in a predetermined shape. A description will be given of an example in which characteristics of at least one or more of the indicators 320 to 334 are changed.

If a specific event is generated in the electronic device, an MCU 222 may receive a data signal, for controlling at least one or more of the indicators 320 to 334, from the electronic device through a data communicating part 226. A description will be given of an example in which there is a missed call list. As described above, in a state where the case 300 is mounted on the electronic device and the front case 310 is placed on a screen of the electronic device, if a user receives a phone call through the electronic device, the screen of the electronic device is in an on-state and the display included in the front case 310 may be transparent according to the on-state of the display of the electronic device. While the user does not receive a phone call, if an incoming call is terminated, the screen of the electronic device is in an off-state and the display may be non-transparent according to the off-state of the screen of the electronic device. In addition, the electronic device may transmit a data signal, for providing notification that there is a missed call, to the MCU 222 through the data communicating unit 226. The MCU 222 may specify that an indicator corresponding to the received data signal is which of the indicators 320 to 334. Also, the MCU 222 may determine a level of voltage to be transmitted to the indicator 320 and may transmit the voltage to the indicator 320 by the determined level such that the specific indicator 320 is displayed on the front case 310. In this case, the front case 310 may display the indicator 320 and may not display the other indicators 322 to 334.

Similarly, at least one of the indicators 322 to 334 may be displayed on the front case 310 in response to an event generated in the electronic device. For example, if the remaining capacity of a battery of the electronic device is decreased to a constant level or less, the indicator 322 may be displayed through the MCU 222. If a connectable BT device is located within a constant distance from the electronic device, the indicator 324 may be displayed. Also, if the electronic device receives an instant message or an e-mail, the indicator 326 or 328 may be displayed. If a connectable Wi-Fi access point (AP) is located within a constant distance from the electronic device, the indicator 330 may be displayed. In addition, if a music listening application is executed in the electronic device, the indicator 332 may be displayed. If an operation mapped to the electronic device is performed through user settings, the indicator 334 may be displayed on the front case 310.

According to various embodiments of the present disclosure, two or more indicators may be simultaneously displayed. For example, if all of a missed call and a missed instant message are present, the indicators 320 and 326 may be simultaneously displayed. Also, if the remaining capacity of the battery of the electronic device is in a constant level or less and if a music listening application is executed, the indicators 322 and 332 may be simultaneously displayed.

Indicators to be displayed on the front case 310 may not be limited to the indicators 320 to 334. There may be more or less indicators than the indicators 320 to 334 3. Positions or shapes of indicators may be different from those of the indicators 320 to 334.

FIG. 4A is a drawing illustrating operations performed in an electronic device 400 a case of the electronic device according to an event generated in the electronic device 400 according to various embodiments of the present disclosure.

Referring to FIG. 4A, an electronic device 400 on which a case 410 is mounted is illustrated. A drawing shown on the top row of FIG. 4A illustrates only the electronic device 400, and a drawing shown on the lower row of FIG. 4A illustrates the electronic device 400 and the case 410 together. The case 410 may correspond to a case 300 of FIG. 3. For example, indicators 320 to 334 included in a display 310 of the case 300 may also be included in a display of the case 410.

In operation 401, a screen of the electronic device may be in an off-state. In this case, the electronic device 400 may transmit a data signal, for providing notification that the screen of the electronic device 400 is in the off-state, to an MCU of the case 410. The MCU may adjust a level of voltage to be transmitted to a display of the case 410 according to the data signal received from the electronic device 400 such that the display of the case 410 becomes a non-transparent state or a mirror state.

In operation 402, an event of receiving an e-mail may be generated in the electronic device 400. The electronic device 400 may transmit a data signal, for providing notification that the e-mail is received, to the MCU. The MCU may select an indicator 420 corresponding to receiving the e-mail among a plurality of indicators (not shown) according to the data signal from the electronic device 400. The MCU may adjust a level of voltage to be transmitted to the indicator 420 such that the indicator 420 is displayed on the display of the case 410.

In operation 403, the case 410 may receive a user input on a region 425 corresponding to a home button of the electronic device 400. In this case, the user input may be a finger of a user and the like as well as a stylus shown in FIG. 4A. The region 425 shown with a dotted line on the case 410 may not be an actually displayed region but a region where the home button of the electronic device 400 is located for convenience of description.

In operation 404, the electronic device 400 may receive a data signal for the user input performed in operation 403 from the MCU. The electronic device 400 may make the screen of the electronic device 400 an on-state according to the received data signal for the user input. At this time, as the display of the case 410 is transparent, the electronic device 400 and the screen of the electronic device 400 may be transmitted through the case 410. An operation of making the display of the case 410 transparent in the MCU may be performed according to the user input received in operation 403. According to various embodiments of the present disclosure, the MCU may make the display of the case 410 transparent by receiving a data signal, for providing notification that the screen of the electronic device 400 is in the on-state, in operation 404.

In addition, a touch panel of the case 410 may receive a user input on the indicator 420. The MCU may transmit a data signal, for providing notification of the user input, to the electronic device 400.

In operation 405, the electronic device 400 may receive the data signal, for providing the notification of the user input, transmitted in operation 404 and may execute an e-mail application according to the received data signal. Therefore, the screen of the electronic device 400 may display an execution screen of the executed e-mail application. Also, the execution screen of the e-mail application displayed on the screen of the electronic device 400 may be transmitted through the case 410 which is transparent in operation 404.

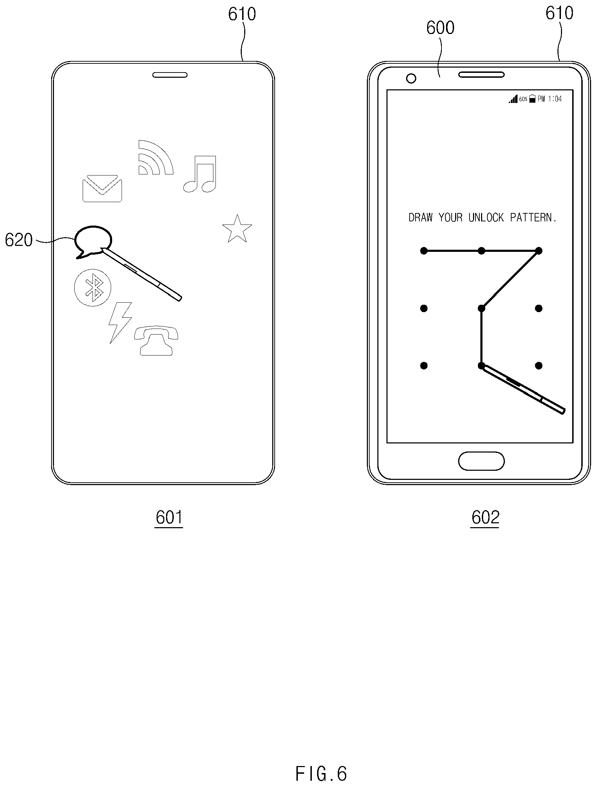

At least some of operations 401 to 405 may be omitted or modified according to various embodiments of the present disclosure. For example, operations 403 and 404 may be omitted, and operation 405 may be performed according to the user input on the indicator 420 displayed on the case 410 in operation 402 (refer to FIG. 6).

According to various embodiments of the present disclosure, in response to the e-mail received in operation 402, the electronic device 400 may display notification that the e-mail is received or a part of the e-mail as a preview type.

If password locking is set in the electronic device 400, the screen of the electronic device 400 in operation 404 may display a screen for entering a password. In this case, operation 405 may not be performed immediately according to the user input on the indicator 420 in operation 404. After a predetermined password should be entered, operation 405 may be performed (refer to FIG. 6).

FIG. 4B is a drawing illustrating an image of emphasizing an indicator displayed on a display of a case of an electronic device according to various embodiments of the present disclosure. A drawing shown in FIG. 4B may correspond to a drawing in operation 404 of FIG. 4A.

Referring to FIG. 4B, a drawing shown at the left-hand side of FIG. 4B, an electronic device 400 may display an image 430 on the electronic device 400's screen. Referring to a drawing shown at the right-hand side of FIG. 4B, if a case 410 is mounted on the electronic device 400, a position where the image 430 is displayed may correspond to a position of the indicator 420 displayed on the case 410. Also, the image 430 may be bigger than the indicator 420. Therefore, if the case 410 is mounted on the electronic device 400, it may be seen that the indicator 420 and the image 430 are overlapped with each other. The image 430 located outside a border of the indicator 420 may play a role in emphasizing the indicator 420.

A method of emphasizing the indicator 420 is given as an example in which the electronic device 400 displays the image 430 on the screen. According to various embodiments of the present disclosure, the image 430 of emphasizing the indicator 420 may not limited to being displayed on the electronic device 400 and may be displayed on a transparent display of the case 410 (e.g., a transparent display 216).

Referring again to FIG. 2, as described above, the at least part of the display 212 may include the EPD material device, the EC device, or the cholesteric device. The MCU 222 may control a characteristic of the EPD device, the EC device, or the cholesteric device by applying a proper voltage to the EPD device, the EC device, or the cholesteric device.

A first case where the display 212 includes the EPD device, the EC device, or the cholesteric device in a region corresponding to the screen of the electronic device and a second case where at least one or more indicators included in the display 212 are configured with the EPD device, the EC device, or the cholesteric device, which are described as a separate example, respectively, may be simultaneously implemented. In other words, as shown in FIGS. 4A and 4B, the electronic device 400 may simultaneously control a transparent state and a non-transparent state for the entire display 212 (or as much as a region corresponding to the screen of the electronic device) and may separately control a transparent state and a non-transparent state for at least one or more indicators.

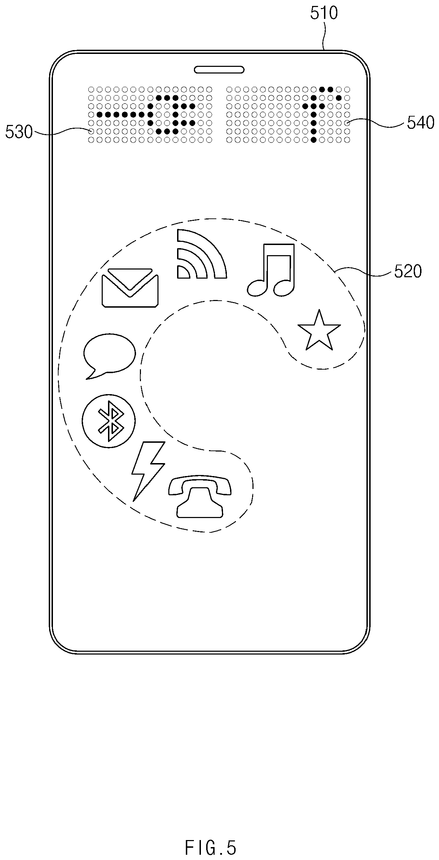

As described above, the transparent display 216 may display an image for emphasizing an indicator displayed on the display 212. In addition, the transparent display 216 may display another indicator for providing notification of an event generated in the electronic device to be similar to an indicator displayed on the display 212. A description will be given with reference to FIG. 5.

FIG. 5 is a drawing illustrating an indicator and a dot image displayed on a display of a case of an electronic device according to various embodiments of the present disclosure.

Referring to FIG. 5, a front case of a case 510 may display a plurality of indicators 520, a first indicator region 530, and a second indicator region 540. A description will be omitted with respect to repeated contents described above for the plurality of indicators 520.

Each of the first indicator region 530 and the second indicator region 540 may display, for example, information (e.g., a dot image) using a 7 × 15 dot matrix. The information may be displayed in response to an event generated in the electronic device. An MCU of the case 510 may receive a data signal corresponding to an event generated in the electronic device from the electronic device and may display an image or animation corresponding to the received data on the first indicator region 530 and the second indicator region 540 to be similar to an operation of displaying the indicator 520. A pattern of the image or animation may be stored in a memory (not shown) of the case 510. Meanwhile, the pattern of the image or animation may be included in the received data.

Also, the MCU may receive a data signal for displaying at least one or more of the plurality of indicators 520 from the electronic device and may receive a data signal for displaying a dot image or animation on the first indicator region 530 or the second indicator region 540. For example, formats or headers of packets, and the like of the data signals may be different from each other. Therefore, the MCU may distinctively and properly process the data signals.

A dot image displayed on the first indicator region 530 may be an indicator for providing notification that a power cable is connected to the electronic device. A dot image displayed on the second indicator region 540 may be an indicator for providing notification that new writing is uploaded to Facebook™. Various indicators may be displayed on the first indicator region 530 or the second indicator region 540. For example, an indicator for providing notification of a current time, an indicator for providing notification that there is a low battery power, and an indicator for feelings corresponding to voice contents of a user in a voice recognition application such as an s-voice may be displayed.

In addition, an indicator displayed on the first indicator region 530 or the second indicator region 540 may be a natural image which may be implemented through a transparent display as well as a dot image. In addition, an animation rather than an image may be displayed on the first indicator region 530 or the second indicator region 540. For example, in a rainy day, a rainy animation may be displayed. In a snowy day, a snowy animation may be displayed.

FIG. 6 is a drawing illustrating an operation of implementing a user input pattern, received in a case of an electronic device, in the electronic device according to various embodiments of the present disclosure.

Referring to FIG. 6, in operation 601, a case 610 may display an indicator 620 corresponding to an event generated in an electronic device 600 and may receive a user input on the displayed indicator 620. Other indicators shown in operation 601 may be shown for convenience of description. If an instant message receiving event is generated in the electronic device 600, the other indicators may not be displayed on the case 610.

An MCU of the case 610 may transmit a data signal, for providing notification of the received user input, to the electronic device 600.

If an unlock number or an unlock pattern is set in the electronic device 600, in operation 602, the electronic device 600 may display the unlock number or the unlock pattern as a response to the data signal for providing the notification of the user input. Also, the MCU may make a display of the case 610 transparent by receiving a data signal, for providing notification that a screen of the electronic device is in an on-state, from the electronic device 600.

As such, a user may open the front case 610 from the electronic device 600, may enter a pattern, and may release a locked state of the electronic device 600. Also, according to various embodiments of the present disclosure, the user may enter a pattern on the case 610 and may release a locked state of the electronic device 600. For example, a touch panel of the case 610 may receive a pattern as a user input from the user. The MCU may transmit the received pattern to the electronic device 600 to unlock a locked state.

Referring again to FIG. 2, a memory (not shown) may store data. The memory may include the at least same or similar components as or to those of a memory 130. In this case, the data stored in the memory may include data input and output between respective components in the case 200 and may include data input and output between the case 200 and components outside the case 200. For example, the memory may store voltage table data which may change a characteristic of the EPD device, the EC device, or the cholesteric device included in at least a part of the display 212. Also, the memory may store a pattern of a dot image or a dot animation to be displayed on the transparent display 216.

This memory may include a hard disc drive, a read only memory (ROM), a random access memory (RAM), a flash memory, a memory card, and the like, which are present inside or outside the case 200.

It should be well understood to those skilled in the art that the display 212, the touch panel 214, the transparent display 216, the MCU 222, the power feeding part 224, and the data communicating part 226 may be separately implemented or one or more thereof may be integrated and implemented. Also, at least a part of each of the components may be modified and or omitted. For example, at least a part of the front case 210 may include a magnet to be electrically attached to a screen or bezel of the electronic device. In this case, the electronic device may recognize whether being attached with the front case 210. The MCU 22 may receive data, about whether the electronic device is attached with the front case 210, from the electronic device and may change a state of the display 212. For example, if the front case 210 is attached (closed) to the electronic device, the MCU 222 may receive a corresponding data signal from the electronic device and may make the display 212 a non-transparent state or a mirror state according to the received data signal.

According to various embodiments of the present disclosure, the transparent display 216 may be omitted.

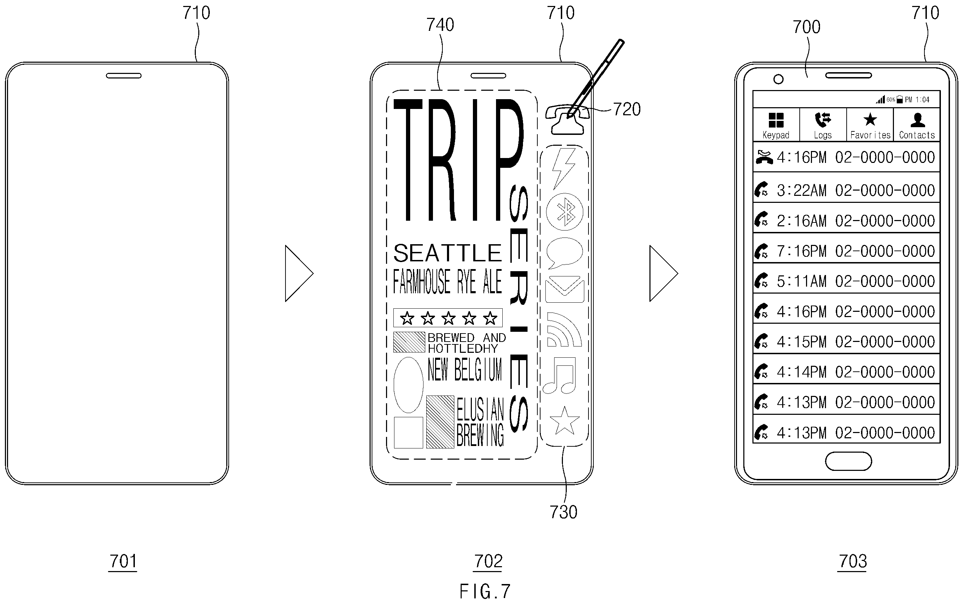

FIG. 7 is a drawing illustrating indicators and and a background image displayed on a display of a case of an electronic device according to various embodiments of the present disclosure.

Referring to FIG. 7, a case 710 may further include the background image 740 other than indicators 720 and 730 to be distinguished from a case (specifically, a display of a corresponding case) shown in FIGS. 2 to 6.

In operation 701, the case 710 is in a non-transparent state or a mirror state, and an event corresponding to a missed call may be generated in the electronic device 700.

In operation 702, the case 710 may receive a data signal for the event corresponding to the missed call generated in operation 701 and may display the indicator 720 corresponding to the event among the indicators 720 and 730 according to the received data signal. In addition, the case 710 may further display a background image 740 together with the indicator 720 corresponding to the event.

Although the event generated in operation 701 is not the event corresponding to the missed call but an event for displaying one of various indicators included in the indicators 730, the background image 740 may be displayed on the case 710. In other words, if at least one indicator is displayed on the case 710, the background image 740 may be displayed together with the corresponding indicator irrespective of whether the corresponding indicator is which of the indicators 730.

Also, in operation 702, the case 710 may receive a user input on the indicator 720. In operation 703, the case 710 may become transparent according to the received user input. In addition, in operation 703, a user may see an application screen, which displays a missed call list performed in the electronic device 700, over the case 710 which becomes transparent.

The indicators 730 displayed in operation 702 may be illustrated for convenience of description and may not be displayed in a real operation.

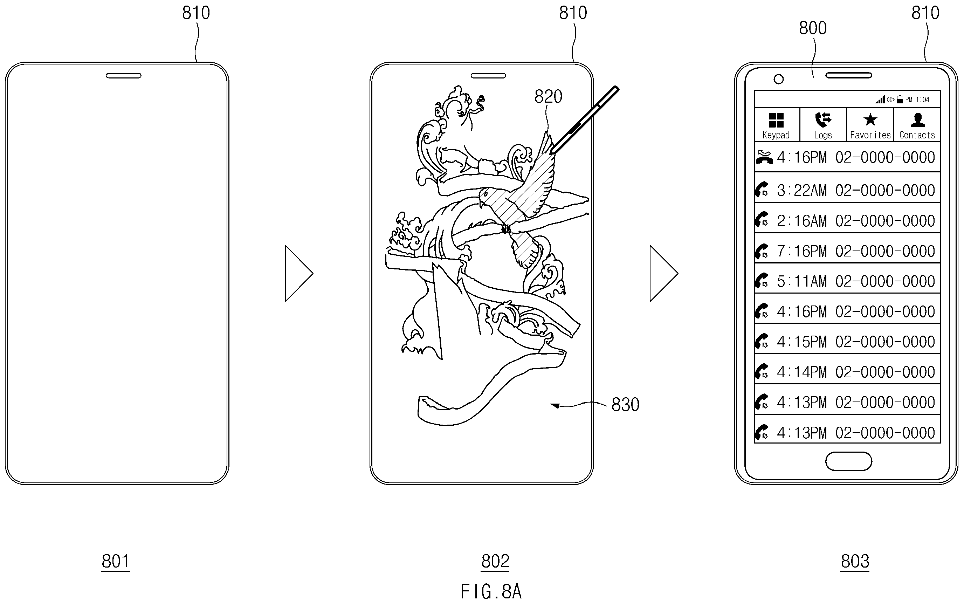

FIG. 8A is a drawing illustrating an indicator and a background image displayed on a display of a case of an electronic device 800 according to various embodiments of the present disclosure.

Referring to FIG. 8A, an indicator displayed on an indicator 820 may have an image connected with a background image 830 to be distinguished from indicators shown in FIGS. 2 to 7. For example, each of the indicators of FIGS. 2 to 7 may have an icon shape, and the indicator 820 may have an image shape according to various embodiments of the present disclosure.

In operation 801, a case 810 may be in a non-transparent state or a mirror state, and an event corresponding to a missed call may be generated in an electronic device 800.

In operation 802, the case 810 may receive a data signal for the event corresponding to the missed call generated in operation 801 and may display the indicator 820 corresponding to the event according to the received data signal. In addition, the case 810 may further display the background image together with the indicator 820 corresponding to the event.

Also, in operation 802, the case 810 may receive a user input on the indicator 820. In operation 803, the case 810 may become transparent according to the received user input. In addition, in operation 803, a user may see an application screen, which displays a missed call list performed in the electronic device 800, over the transparent case 810.

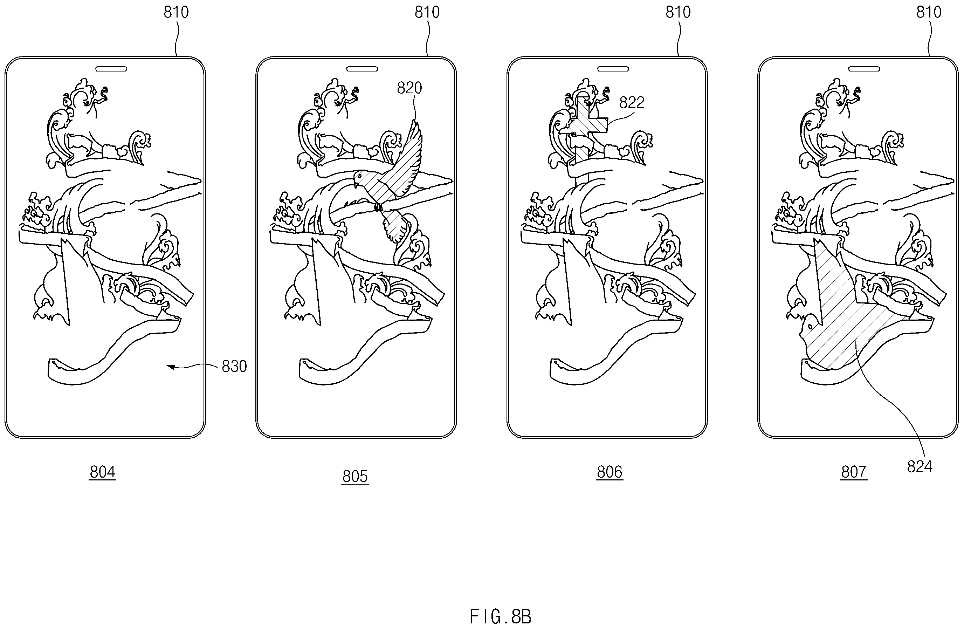

FIG. 8B is a drawing illustrating a background image and various indicators corresponding to the background image, which are displayed on a display of a case of an electronic device, according to various embodiments of the present disclosure.

Referring to FIG. 8B, in operation 804, only a background image 830 may be displayed on a case 810. In operation 805, an indicator 820 may be displayed together with the background image 830. In operation 806, the indicator 822 may be displayed together with the background image 830. In operation 807, an indicator 824 may be displayed together with the background image 830. In this case, the indicators 820, 822, and 824 may correspond to different events generated in the electronic device 800.

The indicator 820 may have an image corresponding to a dove of the top end of the case 810. The indicator 822 may have an image corresponding to a cross. The indicator 824 may have an image corresponding to a dove of the lower end of the case 810. Therefore, as one indicator is displayed, the incomplete background image 830 may be supplemented by the displayed indicator. When more indicators are simultaneously displayed, the background image 830 may be seen to become more and more similar to a completed image.

In addition, more various indicators may be displayed together with the background image 830 on the display. However, a detailed description for the various indicators will be omitted.

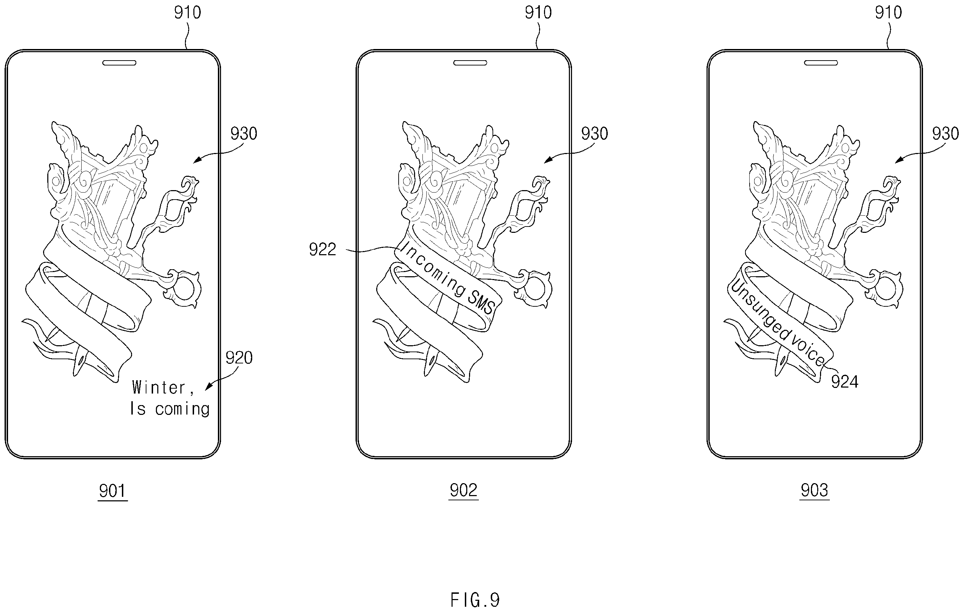

FIG. 9 is a drawing illustrating indicators and a background image displayed on a display of a case of an electronic device according to various embodiments of the present disclosure.

Referring to FIG. 9, in operation 901, an indicator 920 and a background image 930 may be displayed on a display of a case 910. In operation 902, an indicator 922 and the background image 930 may be displayed on the display of the case 910. In operation 903, an indicator 924 and the background image 930 may be displayed on the display of the case 910.

The background image 930 of FIG. 9 may be displayed together with the indicator 920, 922, or 924 to be similar to background images 740 and 830 of FIGS. 7, 8A, and 8B.

The indicators 920, 922, and 924 may have different shapes from indicators of FIGS. 2 to 8B. For example, while each of indicators of FIGS. 2 to 7 has an icon shape and an indicator of FIGS. 8A and 8B has an image shape, each of the indicators 920, 922, and 924 of FIG. 9 may have a text shape according to various embodiments of the present disclosure.

The indicator 920 may correspond to, for example, a low battery capacity event generated in the electronic device. The indicator 922 may correspond to a missed instant message event generated in the electronic device. The indicator 924 may correspond to a missed call event generated in the electronic device.

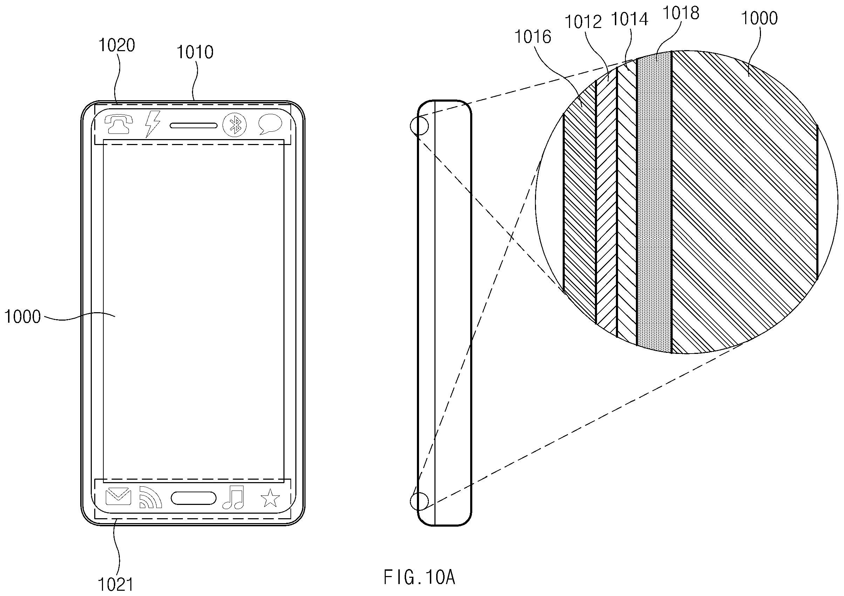

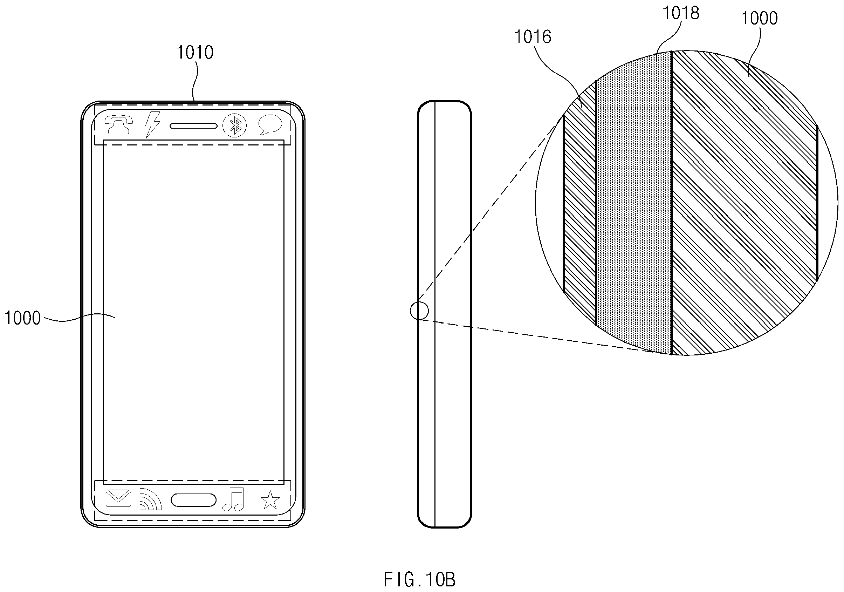

FIGS. 10A and 10B are drawings illustrating an electronic device and a cross section of a case of the electronic device according to various embodiments of the present disclosure. A description will be given of at least a partial different shape from a cross section of a case 200 shown in FIG. 2, particularly, a cross section of a front case 210 with reference to FIGS. 10A and 10B.

Referring to FIGS. 10A and 10B, a drawing shown on the left of each of FIGS. 10A and 10B, includes a front case of a case 1010 mounted on an electronic device 1000 and may include a first indicator group 1020 and a second indicator group 1021. According to various embodiments of the present disclosure, the first indicator group 1020 and the second indicator group 1021 may be disposed on positions corresponding to bezels of the electronic device 1000.

Referring to a cross-section view shown on the right of FIG. 10A, a front case corresponding to regions including the first indicator group 1020 and the second indicator group 1021 may include a display 1012, directly including the first indicator group 1020 and the second indicator group 1021, a transparent display 1014, an acrylic mixture 1016, and a silicon 1018. As described above, the transparent display 1014 may display an image of emphasizing at least one or more indicators. Also, the silicon 1018 may play a role as a resilient material between the electronic device 1000 and the front case.

Also, although not illustrated in FIG. 10A, the front case corresponding to the regions including the first indicator group 1020 and the second indicator group 1021 may further include a touch panel for touching an indicator.

A drawing shown on the right of FIG. 10B illustrates a cross section of a front case corresponding to a region in which the first indicator group 1020 and the second indicator group 1021 are not included. The front case corresponding to the region in which the first indicator group 1020 and the second indicator group 1021 are not included may include only the acrylic mixture 1016 and the silicon 1018 without the display 1012 and the transparent display 1014. In this case, since the display 1012 and the transparent display 1014 are not included in the front case, a user may provide a user input to a screen of the electronic device 1000 through the front case. Also, in this case, the front case corresponding to the region in which the first indicator group 1020 and the second indicator group 1021 are not included should not include a separate touch panel.

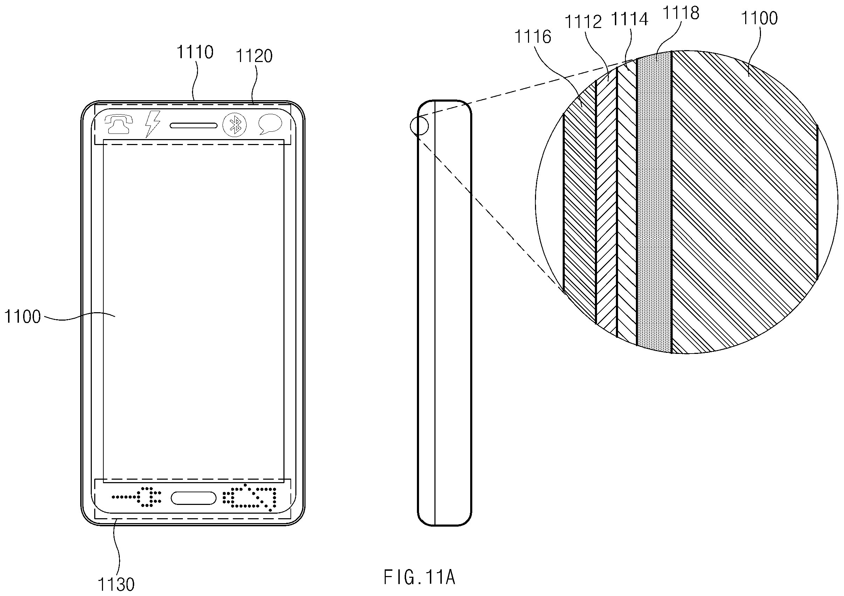

FIGS. 11A to 11C are drawings illustrating an electronic device 1100 and a cross section of a case of the electronic device according to various embodiments of the present disclosure.

Referring to FIGS. 11A to 11C, a drawing shown on the left of each of FIGS. 11A to 11C, includes a front case of a case 1110 mounted on an electronic device 1100 and may include an indicator group 1120 and a dot indicator region 1130. According to various embodiments of the present disclosure, the indicator group 1120 and the dot indicator region 1130 may be disposed on a position corresponding to an upper bezel of the electronic device 1100 and a position corresponding to a lower bezel of the electronic device 1100, respectively.

Referring to a cross-section view shown on the right of FIG. 11A, a front case corresponding to a region including the indicator group 1120 may include a display 1112, which directly include the indicator group 1120, a transparent display 1114, an acrylic mixture 1116, and a silicon 1118. As described above, the transparent display 1114 may include an image of emphasizing at least one or more indicators. Also, the silicon 1118 may play a role of a resilient material between the electronic device 1000 and the front case.

Also, although not illustrated in FIG. 11A, the front case corresponding to the region including the indicator group 1120 may further include a touch panel for touching an indicator.

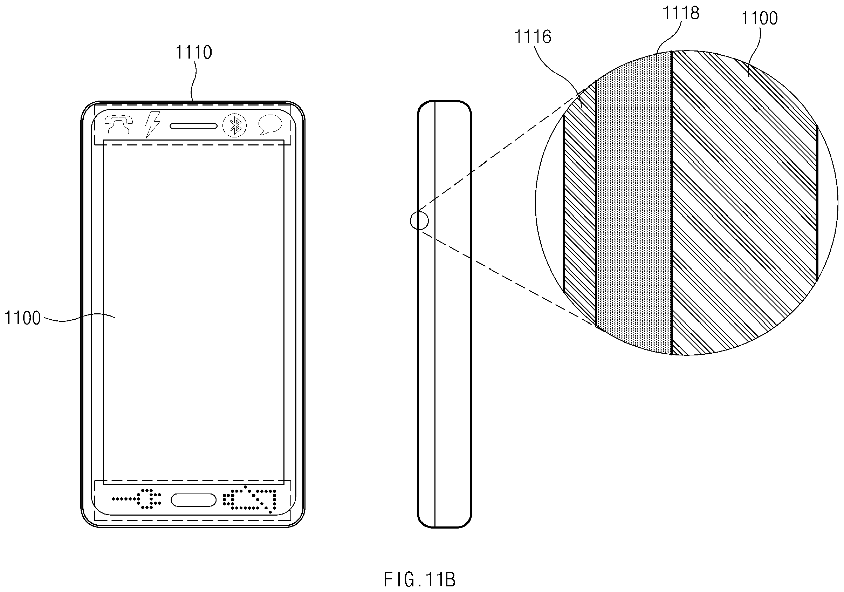

A drawing shown on the right of FIG. 11B may illustrate a cross section of the front case corresponding to a region in which the indicator group 1120 and the dot indicator region 1130 are not included. The front case corresponding to the region in which the indicator group 1120 and the dot indicator region 1130 are not included may include only the acrylic mixture 1116 and the silicon 118 without the display 1112 and the transparent display 1114. In this case, since the display 1112 and the transparent display 1114 are not included, the user may provide a user input to a screen of the electronic device 1100 through the front case. Also, in this case, the front case corresponding to the region in which the indicator group 1120 and the dot indicator region 1130 are not included should not include a separate touch panel.

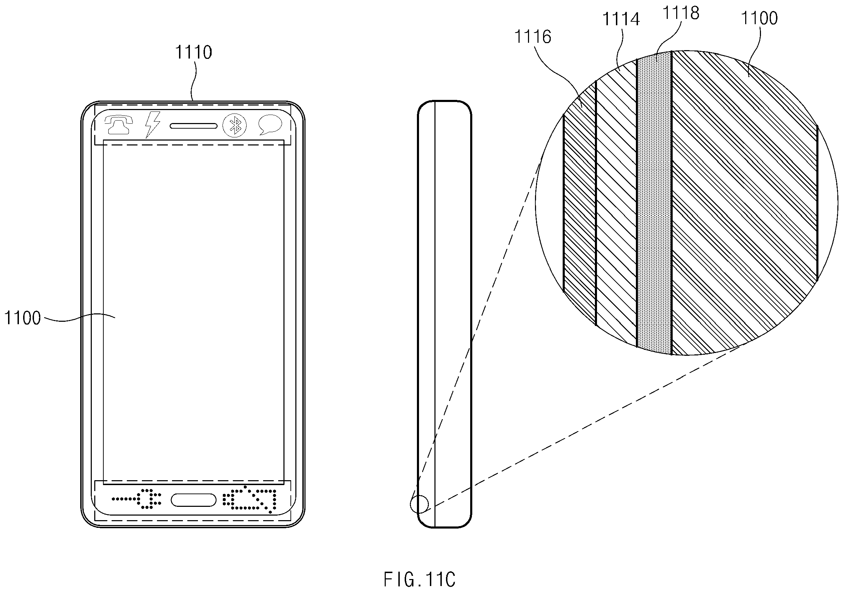

Referring to a cross-section view shown on the right of the FIG. 11C, a front case corresponding to a region including the dot indicator region 1130 may include the transparent display 1114, which directly include the dot indicator region 1130, the acrylic mixture 1116, and the silicon 1118. As described in FIG. 5, the dot indicator region 1130 may express a dot image or a dot animation, corresponding to an event generated in the electronic device 1100, as an indicator. In addition, an indicator displayed on the dot indicator region 1130 may be a region, for simply transmitting information, in which it is unnecessary to be separately touched. The front case corresponding to a region including the dot indicator region 1130 does not need a separate touch panel.

According to various embodiments of the present disclosure, the case of the electronic device may include a display, a power feeding part configured to receive power from the electronic device, and an MCU configured to transmit voltage to at least a part of the display and to adjust a level of the transmitted voltage using the received power.

According to various embodiments of the present disclosure, the at least part of the display may correspond to a screen of the electronic device. The MCU may adjust the voltage level such that the at least part of the display may become transparent or a mirror state.

According to various embodiments of the present disclosure, the case of the electronic device may further include a touch screen panel configured to receive a user input. The adjusting of the voltage level in the MCU such that the at least part of the display becomes transparent may be performed according to the user input.

According to various embodiments of the present disclosure, the MCU may receive data from the electronic device. The voltage level adjusted by the MCU may be determined according to the received data.

According to various embodiments of the present disclosure, the at least part of the display may include an indicator for providing notification of an event generated in the electronic device. The MCU may display the indicator on the display by adjusting the voltage level.

According to various embodiments of the present disclosure, the indicator may be activated and not be seen before the data are received.

According to various embodiments of the present disclosure, the at least part of the display may include a plurality of indicators. The transmitting of the voltage to the at least part of the display in the MCU may be transmitting the voltage to an indicator corresponding to the data among the plurality of indicators.

According to various embodiments of the present disclosure, the at least part of the display may include a plurality of indicators and a background image. The transmitting of the voltage to the at least part of the display in the MCU may be transmitting the voltage to the background image and an indicator corresponding to the data among the plurality of indicators.

According to various embodiments of the present disclosure, the case of the electronic device may further include a touch screen panel configured to receive a user input on the indicator. The MCU may transmit a signal, for controlling the electronic device, as a response to the user input to the electronic device.

According to various embodiments of the present disclosure, the MCU makes at least a part of the display, corresponding to a screen of the electronic device, transparent according to the user input.

According to various embodiments of the present disclosure, the transmitting of the voltage to the at least part of the display in the MUC may be periodically performed.

According to various embodiments of the present disclosure, the case of the electronic device may further include a transparent display. The transparent display may display an image, for emphasizing the indicator, on a position corresponding to the indicator.

According to various embodiments of the present disclosure, the case of the electronic device may further include a transparent display. The MCU may receive data from the electronic device and may display a dot image or a dot animation corresponding to the data on at least one region of the transparent display.

According to various embodiments of the present disclosure, the case of the electronic device may further include a touch screen panel configured to receive a user input pattern. The MCU may transmit the user input pattern to the electronic device. The transmitted user input pattern may be implemented on a screen of the electronic device.

According to various embodiments of the present disclosure, the at least part of the display may include an EPD material device, an EC device, or a cholesteric device.

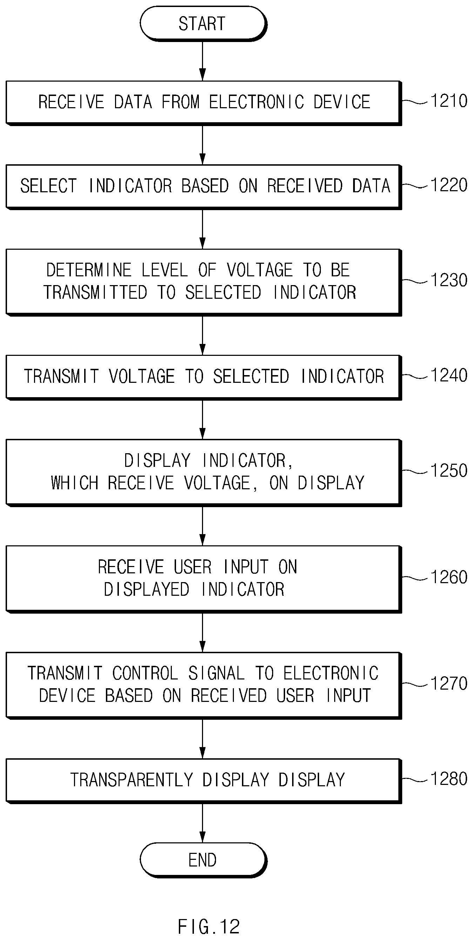

FIG. 12 is a flowchart illustrating a method for processing a user input in a case of an electronic device of FIG. 2 according to various embodiments of the present disclosure.

Referring to FIG. 12, the method for processing the user input according to an embodiment of the present disclosure may include operations processed in time series in the electronic device and the case 200 of the electronic device according to various embodiments of the present disclosure shown in FIGS. 1 to 11C. Although there is omitted content below, content described about the electronic device and the case 200 of the electronic device of FIGS. 1 to 11C may be applied to the method for processing the user input according to an embodiment of the present disclosure shown in FIG. 12.

Referring to FIG. 12, in operation 1210, the case 200 of the electronic device may receive a data signal from the electronic device. The data signal may be a signal for transmitting information about an event generated in the electronic device to the case 200 of the electronic device.

In operation 1220, the case 200 of the electronic device may select an indicator to transmit voltage, according to the data signal received in operation 1210. For example, the case 200 of the electronic device may include a plurality of indicators, configured with the EPD device, the EC device, or the cholesteric device, in a display of the case 200. The case 200 may select an indicator corresponding to an event generated in the electronic device among the plurality of indicators according to the data signal received in operation 1210.

In operation 1230, the case 200 of the electronic device may determine a level of voltage to be transmitted to the indicator selected in operation 1220. For example, characteristics of the EPD device, the EC device, or the cholesteric device, such as a transparent state, a non-transparent state, a mirror state, and the like, may be changed according to a level of voltage held at two opposite ends. Therefore, the case 200 of the electronic device may determine the level of the voltage to be transmitted to the selected indicator such that the indicator selected in operation 1220 is non-transparent and is displayed on the case 200.

In operation 1240, the case 200 of the electronic device may transmit the voltage by the level determined in operation 1230 to the indicator selected in operation 1220.

In operation 1250, the case 200 of the electronic device may display the indicator, which receives the voltage in operation 1240, on the display of the case 200. The displaying of the indicator which receives the voltage in operation 1250 may be performed according to a characteristic of the EPD device, the EC device, or the cholesteric device which configures the indicator.

In operation 1260, the case 200 of the electronic device may receive a user input on the indicator displayed on the display of the case 200 in operation 1250. The user input may be received through a touch panel of the case 200.

In operation 1270, the case 200 of the electronic device may transmit a control signal to the electronic device according to the user input received in operation 1260. The control signal may be a signal for providing notification that the user input on the displayed indicator is received.

In operation 1280, the case 200 of the electronic device may transparently display the display of the case 200. The transparently displaying of the display of the case 200 in operation 1280 may be performed according to the user input received in operation 1260. In this case, the case 200 of the electronic device may determine a level of voltage for transparently displaying the display and may transmit the voltage to the display to be similar to operations 1230 and 1240.

According to various embodiments of the present disclosure, the transparently displaying of the display of the case 200 in operation 1280 may be performed according to the control signal transmitted in operation 1270. The transparently displaying of the display of the case 200 in operation 1280 may be performed according to a new data signal received from the electronic device after operation 1270 is performed.

Orders among operations 1210 to 1280 described with reference to FIG. 12 may be, but are not limited to, only an example. In other words, the orders among operations 1210 to 1280 may be mutually changed, and some of operations 1210 to 1280 may be simultaneously performed. For example, operation 1270 may be performed after operation 1280 is performed.

Also, operations 1210 to 1280 may be periodically repeated every predetermined time and may be performed again according to a user input.

For example, the case 200 of the electronic device, particularly, an MCU 222 of FIG. 2 may periodically transmit voltage to the display of the case 200. A basic state (a state where voltage is not applied) of the EC device may be a transparent state. Although the EC device is in a non-transparent state after voltage is applied, it may not maintain a permanent non-transparent state. In other words, the non-transparent EC device may be transparent again over a certain time without applying a separate voltage. Therefore, an indicator displayed on the case 210 as being non-transparent may be not seen on the case 210 because being transparent over a certain time while a user input is not received. Therefore, to prevent the indicator from being transparent, the MCU 222 may periodically transmit voltage to the indicator. The above-described operation may be performed to maintain a state of the display of the case 200, corresponding to the screen of the electronic device, as well as the indicator.

In contrast, the cholesteric device may have a non-transparent state as a basic state. Therefore, to maintain a transparent state of a transparent cholesteric device, the MCU 222 may periodically transmit voltage to the cholesteric device to be similar to the EC device.

According to various embodiments of the present disclosure, the method for controlling the display of the case of the electronic device may include receiving power, adjusting a level of voltage to be transmitted to at least a part of the display of the case using the received power, and transmitting the voltage to the display by the adjusted level.

According to various embodiments of the present disclosure, the at least part of the display may correspond to a screen of the electronic device. The method may further include adjusting the level of the voltage such that the at least part of the display becomes transparent or a mirror state according to the level of the transmitted voltage.

According to various embodiments of the present disclosure, the at least part of the display may include an indicator for providing notification of an event generated in the electronic device. The method may further include displaying the indicator on the display according to the level of the transmitted voltage.

According to various embodiments of the present disclosure, the at least part of the display may include a plurality of indicators and a background image. The method may further include displaying the background image and one of the plurality of indicators on the display.

According to various embodiments of the present disclosure, the transmitting of the at least part of the display may be periodically performed.

The terminology "module" used herein may mean, for example, a unit including one of hardware, software, and firmware or combinations of two or more thereof. The terminology "module" may be interchangeably used with, for example, terminologies "unit", "logic", "logical block", "component", "circuit", and the like. The "module" may be a minimum unit of an integrated component or a part thereof. The "module" may be a minimum unit performing one or more functions or a part thereof. The "module" may be mechanically or electronically implemented. For example, the "module" may include at least one of an application-specific integrated circuit (ASIC) chip, field-programmable gate arrays (FPGAs), or a programmable-logic device, which is well known or will be developed in the future, for performing certain operations.

It will be appreciated that embodiments of the present disclosure can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

For example, according to various embodiments of the present disclosure, at least a part of a device (e.g., modules or the functions) or a method (e.g., operations) may be implemented with, for example, instructions stored in a computer-readable storage media which has a program module. When the instructions are executed by one or more processors (e.g., a processor 120 of FIG. 1), the one or more processors may perform functions corresponding to the instructions. The computer-readable storage media may be, for example, a memory 130 of FIG. 1.

The computer-readable storage media may include a hard disk, a floppy disk, magnetic media (e.g., a magnetic tape), optical media (e.g., a compact disc ROM (CD-ROM)), a DVD, magneto-optical media (e.g., a floptical disk), a hardware device (e.g., a ROM, a RAM, or a flash memory, and the like), and the like. Also, the program instructions may include not only mechanical codes compiled by a compiler but also high-level language codes which may be executed by a computer using an interpreter and the like. The above-mentioned hardware device may be configured to operate as one or more software modules to perform operations according to various embodiments of the present disclosure, and vice versa.

It will be appreciated that the storage devices and storage media are embodiments of machine-readable storage that are suitable for storing a program or programs comprising instructions that, when executed, implement embodiments of the present disclosure. Accordingly, certain embodiments provide a program comprising code for implementing a case, device, apparatus, system and/or a method according to any aspect, embodiment, example or claim disclosed herein, and a machine-readable storage storing such a program. Still further, such programs may be conveyed electronically via any medium such as a communication signal carried over a wired or wireless connection and embodiments suitably encompass the same.

Modules or program modules according to various embodiments of the present disclosure may include at least one or more of the above-mentioned components, some of the above-mentioned components may be omitted, or other additional components may be further included therein. Operations executed by modules, program modules, or other elements may be executed by a successive method, a parallel method, a repeated method, or a heuristic method. Also, some of the operations may be executed in a different order or may be omitted, and other operations may be added.

According to various embodiments of the present disclosure, the case of the electronic device may control the display of the case to become a transparent state, a non-transparent state, or a mirror state. Also, the case of the electronic device may provide an intuitive user interface (UI)/user experience (UX) to the user by controlling the display of the case and displaying an indicator on at least a part of the display.

While the present invention has been shown and described with reference to various embodiments thereof, it will be understood by those skilled in the art that various changes in form and details may be made therein without departing from the scope of the present invention, as defined by the appended claims.

## Claims

1. A case (210) for an electronic device (101), the case (210) comprising:
a display (212);
a power feeding part (224) configured to receive power; and
a controller (222) configured to:
transmit a voltage to at least a part of the display (212) corresponding to a screen of the electronic device (101) using the received power, and
adjust a level of the transmitted voltage,
wherein the controller (222) is further configured to adjust the voltage level such that the at least part of the display (212) becomes transparent or enters a mirror state, and receive data from the electronic device (101), and wherein the voltage level adjusted by the controller (222) is determined according to the received data, and wherein the at least part of the display (212) comprises an indicator (320, 420, 520) for providing notification of an event generated in the electronic device (101), and the controller (222) is further configured to display the indicator on the display (212) by adjusting the voltage level, and wherein the indicator is inactivated before the data is received.

2. The case (210) of claim 1, further comprising:
a touch screen panel (214) configured to receive a user input,
wherein the adjusting of the voltage level in the controller (222) such that the at least part of the display (212) becomes transparent is performed according to the user input.

3. The case (210) of claim 1,
wherein the at least part of the display (212) comprises a plurality of indicators, and
wherein the transmitting of the voltage to the at least part of the display (212) in the controller (222) comprises transmitting the voltage to an indicator corresponding to the data among the plurality of indicators.

4. The case (210) of claim 1 or 3,
wherein the at least part of the display (212) comprises a plurality of indicators and a background image, and
wherein the transmitting of the voltage to the at least part of the display (212) in the controller (222) comprises transmitting the voltage to the background image and an indicator corresponding to the data among the plurality of indicators.

5. The case (210) of claim 1, 3 or 4, further comprising:
a touch screen panel (214) configured to receive a user input on the indicator,
wherein the controller (222) is further configured to transmit a signal, for controlling the electronic device (101), as a response to the user input to the electronic device (101).

6. The case (210) of claim 5, wherein the controller (222) is further configured to make at least a part of the display (212), corresponding to a screen of the electronic device (101), transparent according to the user input.

7. The case (210) of any of claims 1 to 6, further comprising:
a transparent display,
wherein the transparent display displays an image, for emphasizing the indicator, on a position corresponding to the indicator.

8. The case (210) of any preceding claim, wherein the transmitting of the voltage to the at least part of the display (212) in the controller is periodically performed.

9. The case (210) of any preceding claim, further comprising:
a transparent display,
wherein the controller (222) is further configured to receive data from the electronic device (101) and display a dot image or a dot animation corresponding to the data on at least one region of the transparent display.

10. The case (210) of any preceding claim, further comprising:
a touch screen panel (214) configured to receive a user input pattern,
wherein the controller (222) is further configured to transmit the user input pattern to the electronic device (101), and
wherein the transmitted user input pattern is implemented on a screen of the electronic device (101).

11. A method for controlling a display (212) of a case (210) for an electronic device (101), the method comprising:
receiving power;
adjusting a level of a voltage to be transmitted to at least a part of the display (212) of the case (210) corresponding to a screen of the electronic device (101); and
transmitting the voltage to the display by the adjusted level using the received power, wherein the method further comprises
receiving data from the electronic device and adjusting the voltage level such that the at least part of the display (212) becomes transparent or enters a mirror state, and wherein the adjusted voltage level is determined according to the received data, and wherein the at least part of the display (212) comprises an indicator (320, 420, 520) for providing notification of an event generated in the electronic device (101), and wherein the method further comprises displaying the indicator on the display (212) by adjusting the voltage level, and wherein the indicator is inactivated before the data is received.

12. The method of claim 11,
wherein at least another part of the display (212) comprises at least one indicator region for providing notification of the event or another event generated in the electronic device (101), and
wherein a user input to the indicator causes a display of content corresponding to the indicator in the at least one indicator region.

## Patentansprüche

1. Gehäuse (210) für eine elektronische Vorrichtung (101), wobei das Gehäuse (210) Folgendes umfasst:
eine Anzeige (212);
einen Leistungsversorgungsteil (224), der zum Empfangen von Leistung konfiguriert ist; und eine Steuerung (222), die zu Folgendem konfiguriert ist:
Übertragen einer Spannung auf zumindest einen Teil der Anzeige (212), der einem Bildschirm der elektronischen Vorrichtung (101) entspricht, unter Verwendung der empfangenen Leistung und
Einstellen des Pegels der übertragenen Leistung,
wobei die Steuerung (222) außerdem dazu konfiguriert ist, den Spannungspegel so einzustellen, dass der mindestens eine Teil der Anzeige (212) transparent wird oder in einen Spiegelungszustand wechselt, und Empfangen von Daten von der elektronischen Vorrichtung (101) und wobei der durch die Steuerung (222) eingestellte Spannungspegel gemäß den empfangenen Daten bestimmt wird und wobei der mindestens eine Teil der Anzeige (212) ein Anzeigesymbol (320, 420, 520) zum Bereitstellen einer Benachrichtigung über ein in der elektronischen Vorrichtung (101) generiertes Ereignis umfasst und die Steuerung (222) außerdem dazu konfiguriert ist, das Anzeigesymbol durch Einstellen des Spannungspegels auf der Anzeige (212) anzuzeigen, und wobei das Anzeigesymbol deaktiviert wird, bevor die Daten empfangen werden.

2. Gehäuse (210) nach Anspruch 1, ferner umfassend:
ein Touchscreen-Feld (214), das zum Empfangen einer Benutzereingabe konfiguriert ist,
wobei das Einstellen des Spannungspegels in der Steuerung (222) derart, dass der mindestens eine Teil der Anzeige (212) transparent wird, gemäß der Benutzereingabe durchgeführt wird.

3. Gehäuse (210) nach Anspruch 1,
wobei der mindestens eine Teil der Anzeige (212) eine Vielzahl von Anzeigesymbolen umfasst und
wobei das Übertragen der Spannung auf den mindestens einen Teil der Anzeige (212) in der Steuerung (222) ein Übertragen der Spannung auf ein Anzeigesymbol, das den Daten entspricht, aus der Vielzahl von Anzeigesymbolen umfasst.

4. Gehäuse (210) nach Anspruch 1 oder 3,
wobei der mindestens eine Teil der Anzeige (212) eine Vielzahl von Anzeigesymbolen und ein Hintergrundbild umfasst und
wobei das Übertragen der Spannung auf den mindestens einen Teil der Anzeige (212) in der Steuerung (222) ein Übertragen der Spannung auf das Hintergrundbild und ein den Daten entsprechendes Anzeigesymbol aus der Vielzahl von Anzeigesymbolen umfasst.

5. Gehäuse (210) nach Anspruch 1, 3 oder 4, ferner umfassend:
ein Touchscreen-Feld (214), das dazu konfiguriert ist, eine Benutzereingabe über das Anzeigesymbol zu empfangen,
wobei die Steuerung (222) außerdem dazu konfiguriert ist, als Reaktion auf die Benutzereingabe ein Signal zum Steuern der elektronischen Vorrichtung (101) an die elektronische Vorrichtung (101) zu übertragen.

6. Gehäuse (210) nach Anspruch 5, wobei die Steuerung (222) außerdem dazu konfiguriert ist, zumindest einen Teil der Anzeige (212), der einem Bildschirm der elektronischen Vorrichtung (101) entspricht, gemäß der Benutzereingabe transparent zu machen.

7. Gehäuse (210) nach einem der Ansprüche 1 bis 6, ferner umfassend:
eine transparente Anzeige,
wobei die transparente Anzeige ein Bild zum Hervorheben des Anzeigesymbols an einer dem Anzeigesymbol entsprechenden Position anzeigt.

8. Gehäuse (210) nach einem der vorhergehenden Ansprüche, wobei das Übertragen der Spannung auf den mindestens einen Teil der Anzeige (212) in der Steuerung regelmäßig durchgeführt wird.

9. Gehäuse (210) nach einem der vorhergehenden Ansprüche, ferner umfassend:
eine transparente Anzeige,
wobei die Steuerung (222) außerdem dazu konfiguriert ist, Daten von der elektronischen Vorrichtung (101) zu empfangen und ein Punktbild oder eine Punktanimation, das/die den Daten entspricht, auf mindestens einer Region der transparenten Anzeige anzuzeigen.

10. Gehäuse (210) nach einem der vorhergehenden Ansprüche, ferner umfassend:
ein Touchscreen-Feld (214), das zum Empfangen eines Benutzereingabemusters konfiguriert ist, wobei die Steuerung (222) außerdem dazu konfiguriert ist, das Benutzereingabemuster an die elektronische Vorrichtung (101) zu übertragen und
wobei das übertragene Benutzereingabemuster auf einem Bildschirm der elektronischen Vorrichtung (101) implementiert wird.

11. Verfahren zum Steuern einer Anzeige (212) eines Gehäuses (210) für eine elektronische Vorrichtung (101), wobei das Verfahren Folgendes umfasst:
Empfangen von Leistung;
Einstellen eines Pegels einer Spannung, die auf zumindest einen Teil der Anzeige (212) des Gehäuses (210), der einem Bildschirm der elektronischen Vorrichtung (101) entspricht, übertragen werden soll; und
Übertragen der Spannung auf die Anzeige durch den eingestellten Pegel unter Verwendung der empfangenen Leistung, wobei das Verfahren außerdem ein Empfangen von Daten von der elektronischen Vorrichtung und ein Einstellen des Spannungspegels derart, dass der mindestens eine Teil der Anzeige (212) transparent wird oder in einen Spiegelungszustand wechselt, umfasst und wobei der eingestellte Spannungspegel gemäß den empfangenen Daten bestimmt wird und wobei der mindestens eine Teil der Anzeige (212) ein Anzeigesymbol (320, 420, 520) zum Bereitstellen einer Benachrichtigung über ein in der elektronischen Vorrichtung (101) generiertes Ereignis umfasst und wobei das Verfahren außerdem ein Anzeigen des Anzeigesymbols auf der Anzeige (212) durch Einstellen des Spannungspegels umfasst und wobei das Anzeigesymbol deaktiviert wird, bevor die Daten empfangen werden.

12. Verfahren nach Anspruch 11, wobei mindestens ein anderer Teil der Anzeige (212) mindestens eine Anzeigesymbolregion zum Bereitstellen der Benachrichtigung über das Ereignis oder ein anderes in der elektronischen Vorrichtung (101) generiertes Ereignis umfasst und wobei eine Benutzereingabe über das Anzeigesymbol eine dem Anzeigesymbol in der mindestens einen Anzeigesymbolregion entsprechende Inhaltsanzeige hervorruft.

## Revendications

1. Boîtier (210) pour un dispositif électronique (101), le boîtier (210) comprenant :
un affichage (212) ;
une partie d'alimentation électrique (224) configurée pour recevoir l'alimentation ; et
une unité de commande (222) configurée pour :
transmettre une tension à au moins une partie de l'affichage (212) correspondant à un écran du dispositif électronique (101) en utilisant l'alimentation reçue, et
ajuster un niveau de la tension transmise,
dans lequel l'unité de commande (222) est en outre configurée pour ajuster le niveau de tension de manière à ce que l'au moins une partie de l'affichage (212) devienne transparente ou entre dans un état miroir, et recevoir des données depuis le dispositif électronique (101), et dans lequel le niveau de tension ajusté par l'unité de commande (222) est déterminé en fonction des données reçues, et dans lequel l'au moins une partie de l'affichage (212) comprend un indicateur (320, 420, 520) pour donner une notification d'un événement généré dans le dispositif électronique (101), et l'unité de commande (222) est en outre configurée pour afficher l'indicateur sur l'affichage (212) en ajustant le niveau de tension, et dans lequel l'indicateur est inactif avant la réception des données.

2. Boîtier (210) selon la revendication 1, comprenant en outre :
un panneau d'écran tactile (214) configuré pour recevoir une entrée d'utilisateur,
dans lequel l'ajustement du niveau de tension dans l'unité de commande (222) de manière à ce que l'au moins une partie de l'affichage (212) devienne transparent est exécuté en fonction de l'entrée d'utilisateur.

3. Boîtier (210) selon la revendication 1,
dans lequel l'au moins une partie de l'affichage (212) comprend une pluralité d'indicateurs, et
dans lequel la transmission de la tension à l'au moins une partie de l'affichage (212) dans l'unité de commande (222) comprend la transmission de la tension à un indicateur correspondant aux données parmi la pluralité d'indicateurs.

4. Boîtier (210) selon la revendication 1 ou 3,
dans lequel l'au moins une partie de l'affichage (212) comprend une pluralité d'indicateurs et une image d'arrière-plan, et
dans lequel la transmission de la tension à l'au moins une partie de l'affichage (212) dans l'unité de commande (222) comprend la transmission de la tension à l'image d'arrière-plan et d'un indicateur correspondant aux données parmi la pluralité d'indicateurs.

5. Boîtier (210) selon la revendication 1, 3 ou 4, comprenant en outre :
un panneau d'écran tactile (214) configuré pour recevoir une entrée d'utilisateur sur l'indicateur,
dans lequel l'unité de commande (222) est en outre configurée pour transmettre un signal, pour commander le dispositif électronique (101), en réponse à l'entrée d'utilisateur sur le dispositif électronique (101).

6. Boîtier (210) selon la revendication 5, dans lequel l'unité de commande (222) est en outre configurée pour rendre au moins une partie de l'affichage (212), correspondant à un écran du dispositif électronique (101), transparente en fonction de l'entrée d'utilisateur.

7. Boîtier (210) selon l'une quelconque des revendications 1 à 6, comprenant en outre :
un affichage transparent,
dans lequel l'affichage transparent affiche une image, pour mettre en évidence l'indicateur, sur une position correspondant à l'indicateur.

8. Boîtier (210) selon l'une quelconque des revendications précédentes, dans lequel la transmission de la tension à l'au moins une partie de l'affichage (212) dans l'unité de commande est exécutée de manière périodique.

9. Boîtier (210) selon l'une quelconque des revendications précédentes, comprenant en outre :
un affichage transparent,
dans lequel l'unité de commande (222) est en outre configurée pour recevoir des données en provenance du dispositif électronique (101) et afficher une image en points ou une animation en points correspondant aux données sur au moins une zone de l'affichage transparent.

10. Boîtier (210) selon l'une quelconque des revendications précédentes, comprenant en outre :
un panneau d'écran tactile (214) configuré pour recevoir un modèle d'entrée d'utilisateur,
dans lequel l'unité de commande (222) est en outre configurée pour transmettre le modèle d'entrée d'utilisateur au dispositif électronique (101), et
dans lequel le modèle d'entrée d'utilisateur transmis est déployé sur un écran du dispositif électronique (101).

11. Procédé de commande d'un affichage (212) d'un boîtier (210) pour un dispositif électronique (101), le procédé comprenant :
la réception d'alimentation ;
l'ajustement d'un niveau d'une tension devant être transmise à au moins une partie de l'affichage (212) du boîtier (210) correspondant à un écran du dispositif électronique (101) ;
et la transmission de la tension à l'affichage par le niveau ajusté en utilisant l'alimentation reçue, dans lequel le procédé comprend en outre
la réception de données depuis le dispositif électronique et l'ajustement du niveau de tension de manière à ce que l'au moins une partie de l'affichage (212) devienne transparente ou entre dans un état miroir, et dans lequel le niveau de tension ajusté est déterminé en fonction des données reçues, et dans lequel l'au moins une partie de l'affichage (212) comprend un indicateur (320, 420, 520) pour donner une notification d'un événement généré dans le dispositif électronique (101), et dans lequel le procédé comprend en outre l'affichage de l'indicateur sur l'affichage (212) en ajustant le niveau de tension, et dans lequel l'indicateur est inactif avant la réception des données.

12. Procédé selon la revendication 11,
dans lequel au moins une autre partie de l'affichage (212) comprend au moins une zone indicatrice permettant de donner une notification de l'événement ou d'un autre événement généré dans le dispositif électronique (101), et
dans lequel une entrée d'utilisateur sur l'indicateur induit un affichage de contenu correspondant à l'indicateur dans l'au moins une zone indicatrice.
